(19)

**Europäisches Patentamt**

**European Patent Office**

**Office européen des brevets**

(11) **EP 2 416 241 A1**

(12) **EUROPEAN PATENT APPLICATION**

(43) Date of publication:
**08.02.2012 Bulletin 2012/06**

(51) Int Cl.:
*G06F 7/575* (2006.01) *G06F 7/02* (2006.01)

(21) Application number: **10172202.3**

(22) Date of filing: **06.08.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Panasonic Corporation
Kadoma-shi
Osaka 571-8501 (JP)**

(72) Inventor: **Deeley, Simon
Temple Quay, Bristol BS1 6EA (GB)**

(74) Representative: **Haley, Stephen et al
Gill Jennings & Every LLP
The Broadgate Tower
20 Primrose Street
London EC2A 2ES (GB)**

(54) **Configurable arithmetic logic unit**

(57)     An arithmetic logic unit (ALU) is described having at least two multi-bit inputs, a multi-bit function output, a carry input, and a carry output operable to perform at least one function on the at least two multi-bit inputs to provide an output at the function output. The ALU comprises a circuit for performing the function by performing operations on corresponding bit pairs of the multi-bit inputs. The circuit is arranged such that an operation performed on one bit pair of the multi-bit inputs is independently configurable from an operation performed on at least one other bit pair of the multi-bit inputs.

FIGURE 6

## Description

The present invention relates to an Arithmetic Logic Unit (ALU) for use with a reconfigurable device fabric and in particular but not exclusively to an ALU for implementing unaligned or random logic operations.

ALUs are digital circuits that perform arithmetic and logic functions, and are building blocks of more complex circuits, such as microprocessors and central processing units (CPUs). ALUs are also used in reconfigurable devices such as those described in, for example, US6353841, US6252792 and US2002/0157066.

The operations ALUs can perform may include integer arithmetic operations (e.g. addition and subtraction), bit-wise logic operations (e.g. AND, OR, NOT) and bit-shifting operations, such as those used in multiplication and division.

When representing numbers in a digital circuit such as an ALU the range of numbers which can be represented is limited by the number of binary bits the circuit has been configured to use. This number of bits is often termed the bit 'width' of the binary number. When used in reconfigurable devices, it is possible that an operation can be performed on one or more numbers where the resulting number cannot be expressed in the number of bits available to the ALU. For example, in the case of addition and subtraction operations on N-bit numbers, the result will always be representable using N+1 bits with the extra digit being termed the 'carry' bit. Specifically, in the case of operations on binary numbers in an ALU the extra digit is termed a 'carry bit'.

In a circuit, such as an ALU, for performing arithmetic computations, it is generally desirable to minimise circuit area. The number of bits used to represent the inputs and outputs of operations is directly related to the circuit area, therefore it is generally desirable to use as few bits as possible. One technique that utilises the carry bit to achieve this is saturated arithmetic.

Saturated arithmetic involves performing an arithmetic operation such as an addition, detecting if the result exceeds the number of digits available to represent the output and then taking corrective action by generating the minimum or maximum representable result. For example, in some applications, it is acceptable to approximate all numbers that exceed the available range as being the most positive or negative number which can be represented. For example, if 8 bits are available, then numbers from 0 to 255 (unsigned) or -128 to 127 (signed) can be represented. As an illustration of the principle, the operation 100+29 has a true result of 129. The saturated unsigned result would not have any overflow and return the saturated result of 129 (i.e. the same as the true result). However, the signed result would be +127 which is equal to the most positive number that can be represented by 8-bits under signed arithmetic. To detect overflow in a binary addition of two unsigned operands, it is sufficient to test the carry bit - if it is true, then the result exceeds the output range.

There are other situations where the carry bit can convey information about properties of the result of an operation. For example, when subtracting one unsigned number from another, the carry-bit signifies the sign of the result. This can also be used to quickly determine which of two unsigned numbers is the larger, for example, the operation A>B when implemented as B-A would return a 1 on the carry bit where A was greater than B and a 0 where A was less than or equal to B.

An ALU typically implements functions f and g having three inputs (A, B, Cin) and two outputs (F, Cout) such that F=f(A,B,Cin), Cout = g(A, B, Cin) where A and B are multi-bit inputs and Cin is a single binary bit, and F is a multi-bit output having a bit width equal to the input bit width. The interpretation of the outputs F and Cout varies depending on the operation that the ALU is performing. For example, if the ALU is performing an addition, then F is the result of the addition expressed in the same number of bits as the inputs A and B and Cout is the carry bit. In another example, if the ALU is performing a bitwise AND function then the bits of output F are the result of a logical AND operation of the corresponding bits in the A and B inputs and the Cout output is meaningless. In a further example, if the ALU is performing an equality test, then the output F could be meaning less while the Cout output represents the Boolean result of the test.

A reconfigurable device fabric typically comprises a number of ALUs (or other programmable elements) with inputs and outputs that can be connected to each other through a programmable routing network. As with all circuits, it is desirable to minimise circuit area to reduce cost and increase speed. It is desirable, therefore, reduce the number and type of connections that a routing network can make while still providing the ability to make the most likely desired connections. As a result, for example, the F output of one ALU may be easy to connect to the A and B inputs of other ALUs but difficult to connect to a Cin input, while the Cout output of one ALU may be easy to connect to the Cin of other ALUs but harder to connect to the A and B inputs. Further, some devices may have mixed resources, for example in a device with ALUs and Multiplexers, it may be easy to connect ALU F outputs to multiplexer data inputs and Cout outputs to multiplexer select inputs. This would allow operations where the ALU produces a Boolean result on Cout to be easily connected to the select inputs of the multiplexers.

Generally the A and B inputs and F output of an ALU are more than one bit in width (multi-bit). This can lead to considerable area savings in the size of the programmable device because, for example, the number of configuration memory elements can be reduced compared to a fully one-bit architecture. However, there is a problem with multi-bit ALUs. Specifically, when a wide ALU of W-bit width is used to implement an arithmetic operation of X bits where X<W (which we will term an 'unaligned operation'), the X+1 bit of the F output contains the carry bit. This means that the advantages of the efficiencies in the routing network are lost because the carry bit must be extracted from the F output and routed to destinations that are not easily reachable from the F output. Accordingly, there is a clear need for an improved ALU which allows for unaligned operations to be performed without the above recited disadvantages.

In order to solve the problems associated with the prior art, in a first aspect the present invention provides an arithmetic logic unit having at least two multi-bit inputs, a multi-bit function output, a carry input, and a carry output operable to perform at least one function on the at least two multi-bit inputs to provide an output at the function output and preferably the carry output comprising: a circuit for performing the function by performing operations on corresponding bit pairs of the multi-bit inputs wherein the circuit is arranged such that an operation performed on one bit pair of the multi-bit inputs is independently configurable from an operation performed on at least one other bit pair of the multi-bit inputs.

Preferably, the circuit for performing the function comprising a plurality of bit-slice circuits each operable to perform any of a plurality of single-bit operations on corresponding bits of the multi-bit inputs and arranged to co-operate to perform the at least one function; wherein at least one bit slice circuit in the circuit is arranged such that the operation it performs is independently configurable from at least one of the other bit slice circuits of the circuit.

In a preferred embodiment each of the plurality of bit-slice circuits comprises at least two single-bit inputs, an instruction input, and a single-bit function output providing one bit of the multi-bit function output, the single-bit inputs of each bit-slice circuit are arranged to receive one bit from corresponding multi-bit inputs, said bit having a bit position within the multi-bit input corresponding to the position of the bit-slice circuit; each bit-slice circuit is operable to perform a plurality of operations on data provided at the single-bit inputs to provide output data at their respective single-bit function outputs; and said operation is configurable by a signal received at the instruction input wherein the instruction input of each bit-slice is arranged such that it is independently configurable from the instruction inputs of at least one of the other bit slice circuits.

In other embodiments the bit-slice circuits are arranged in an arithmetic carry chain preferably wherein each bit slice circuit further comprises a single-bit carry input (Cin[n]) and a single-bit carry output (Cout[n]) and the bit slice circuits are arranged such that each single-bit carry output is connected to the single-bit carry input of the next bit-slice circuit in the chain thereby forming said arithmetic carry chain.

Specific embodiments of the invention will now be described with reference to the accompanying drawings in which:

Figure 1 represents a reconfigurable device/fabric made up of a plurality of user programmable logic tiles;

Figure 2 represents a closer view of the reconfigurable device of Figure 1, including Arithmetic Logic Units (ALUs) and switch boxes;

Figure 3a shows a block diagram representing an ALU 20 that could be used in a fabric such as that shown in figures 1 and 2.

Figure 3b shows an example of a circuit suitable for implementation of the the ALU of figure 3a.

Figure 4 shows a representation of the inputs (A, B) and function and carry outputs (F, Cout) for a 6-bit addition performed on an 8-bit ALU having the architecture shown in Figure 3b;

Figure 5 shows a block diagram representing a portion of a reconfigurable fabric such as that shown in Figure 2 with an ALU implemented in the manner shown in figures 3a and 3b.

Figure 6 shows an ALU according to an embodiment of the present invention;

Figure 7 shows a block diagram of one of the bit-slices of the ALU of Figure 6;

Figure 8 shows the configuration of the individual bit-slices of the ALU architecture of Figure 6 when performing an unaligned addition;

Figure 9 shows a representation of the inputs (A, B) and function and carry outputs (F, Cout) for the 6-bit addition performed on the 8-bit ALU configured as shown in Figure 7;

Figure 10 shows the ALU of figure 6 configured to perform a 'Not Equal' operation;

Figure 11a shows the result of a 6-bit not equal operation utilising a conventional 8-bit ALU architecture;

Figure 11b shows the result of a 6-bit not equal operation utilising the ALU of Figure 10;

Figure 12 shows a further embodiment in which an ALU having a bit width W=3 is configured to perform an arbitrary 4-input bit random logic function; and

Figure 13 shows the result where two example 3-bit inputs A and B are presented to the inputs of the ALU of Figure 12.

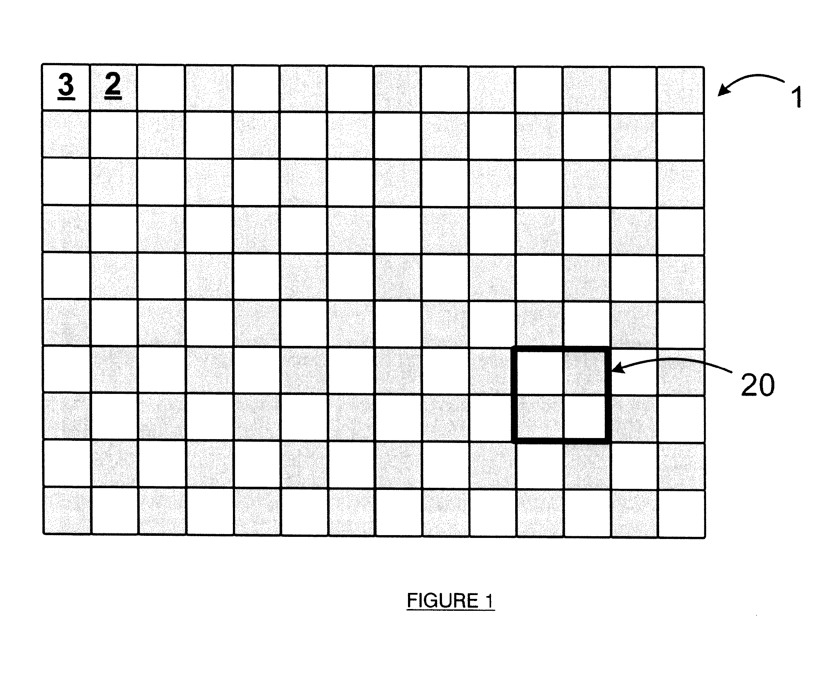

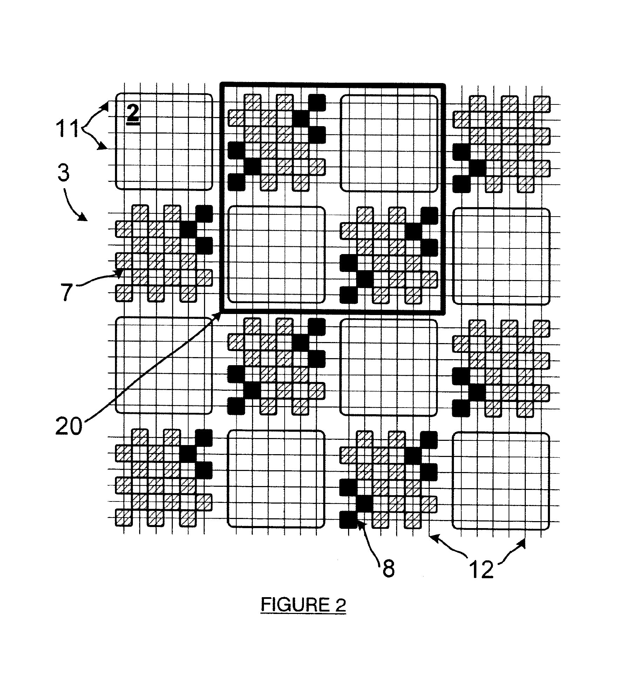

Figure 1 shows a diagram representing a programmable fabric 1 comprising a plurality of Arithmetic Logic Units (ALUs) 2 interconnected by way of a plurality of switching sections 3. As shown in Figure 1, each tile 20 is divided into four areas. A two-by-two group of ALUs 2 and switching sections 3 forms a tile 20, which is the basic building block of the fabric, and is shown bounded by a thick line in Figures 1 and 2. Two of the areas, which are diagonally opposed in the tile 20, provide locations for a pair of ALUs 2. The other two circuit areas, which are also diagonally opposed in the tile, provide the locations for a pair of switchboxes 3.

Each ALU can perform standard arithmetic operations (such as ADD, SUBTRACT) as well as standard logic operations (such as AND, NAND, OR, NOR) on a set number of bits.

Figure 2 shows a closer view of the fabric 1. Each tile 20 contains two ALUs 2 and two switching sections 3. Each switching section 3 comprises a plurality of switches 7 which are each arranged to selectively connect a horizontal bus 11 to a vertical bus 12 at their intersection point. The horizontal and vertical buses can be any number of bits wide. Some switches 8, which are shown as black squares in Figure 2, are used for locally connecting the ALUs 2 to the switching sections 3. Other switches 7, which are shown as striped squares in Figure 2, are used for longer distance connections (e.g. between switching sections 3).

As can be seen from Figure 1 and Figure 2, the fabric 1 has a high degree of homogeneity in that a particular tile can be used (i.e. configured or interconnected) in the exact same way as every other tile in the array.

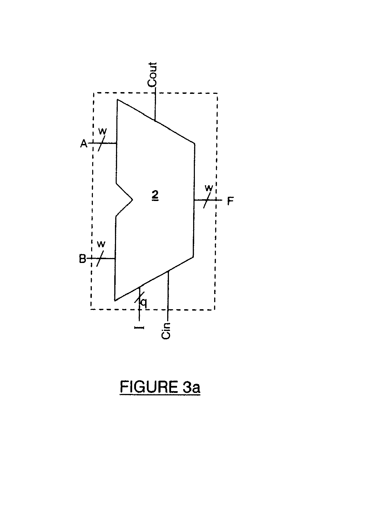

Turning now to Figure 3a, there is shown a block diagram representing a prior art example of an ALU 20 that could be used in a fabric such as that shown in figures 1 and 2. The ALU 20 has multi-bit inputs A and B which preferably have a bit width w=4 bits but in other examples may also comprise larger or smaller bit widths.

ALU 2 is operable to perform a one from a selection of predetermined arithmetic binary functions on binary numbers received at its multi-bit inputs A and B. The desired function is configured by an instruction signal, having a bit width q, at the instruction signal input I. For example, by having a bit width q=4 the instruction signal could provide selection from up to 16 possible functions. The result of the operation is provided at the ALU output F. In addition, the ALU also has a carry input Cin for providing a further input on which the ALU can execute its function, and a carry output Cout which can be utilised to provide an output signal that, for example, indicates the detection overflow or underflow of an arithmetic function. As described above typical uses of the carry bit are to indicate saturation when implementing saturated arithmetic or to provide a carry output for chaining to the carry input of a further ALU stage in a carry chain for performing arithmetic functions on numbers having a bit-width larger than a single ALU..

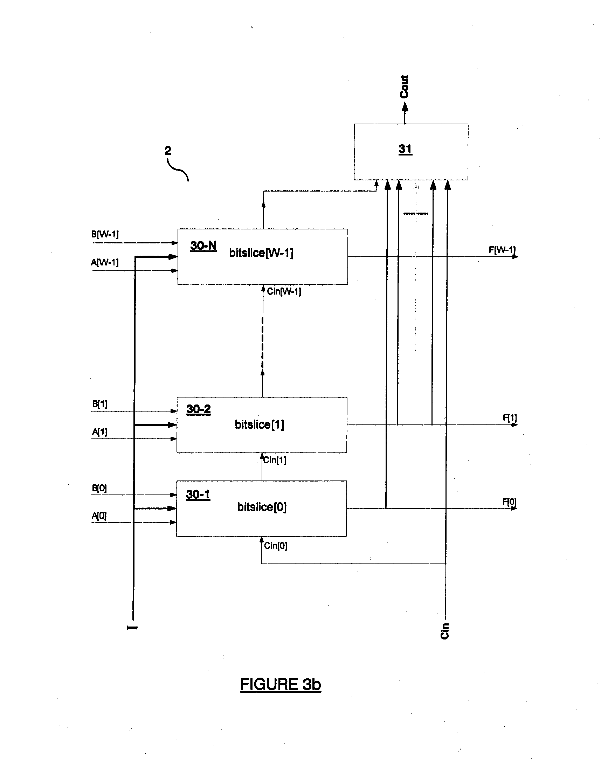

The ALU 2 of Figure 3a is conventionally implemented as shown in figure 3b. The ALU 2 is divided into N 'bit-slices' 30-1 to 30-n where n is equal to the ALU bit width and each bit-slice is a functional circuit configurable to perform an operation on 1-bit inputs A[n], B[n] and Cin[n]. The bits of the multi-bit inputs A and B are distributed across the bit-slices 30-1 to 30-n such that least significant bits A[0] and B[0] of the inputs A and B are fed to bitslice[0] 30-1, the next least significant bits A[1] and B[1] are provided to the bitslice[1] 30-2 and so on with the most significant bits A[w-1] and B[w-1] being provided to bitslice[w-1] 30-n. Typically, the bit-slices are arranged in an 'arithmetic carry chain' from least significant bit (LSB) to most significant bit (MSB). In other words, the carry output of bitslice[0] 30-1 is connected to a carry input of bitslice[1] 30-2 and so on until bitslice[w-1] 30-n is reached with the carry output Cout[w-1] of bitslice[w-1] 30-n (representing the MSB) utilised to provide the main Cout of the ALU. The carry signal of the main carry input Cin of the ALU is fed to the carry input of bitslice [0] 30-1.

The instruction input I of the ALU 2 provides an instruction input by means of a common interconnect to each of the bit-slices 30-1 to 30-n. The outputs F[0] to F[w-1] of the bit-slices 30-1 to 30-n form the output F of the ALU 2. In addition, the bit-slice outputs F[0] to F[w-1] are also preferably connected to a 'carry logic' circuit 31. The signal at the carry output of the MSB bit-slice 30-n is also provided to the carry logic circuit 31. The carry logic circuit 31 may then perform further operations on the carry and function outputs Cout[w-1] and F[0] to F[w-1] to generate a carry output signal which is provided to the main carry output Cout of the ALU 2. For example, the carry logic 31 could be used to implement a 'not equal' (!=) function where the Cout=1 when A does not equal B and Cout=0 when A does equal B. Such an operation has the form of |(A XOR B) or in other words an reductive OR operation on bits that result from a bit-wise XOR operation on A and B. The bit-wise XOR operation could be performed by bit-slices 30-1 to 30-n and the carry logic could be configured to perform the reductive OR operation on the resulting output bits F[0] to F[w-1] and the result of that operation would be provided as the carry output Cout. The function of the carry logic 31 may be configured by means of a further instruction input or the output(s) of a further logic circuit in the ALU 2 itself or located elsewhere in a device fabric 1. Alternatively, the carry logic 31 may be omitted altogether or configured to such that it can be over-ridden by a static or dynamic over-ride signal.

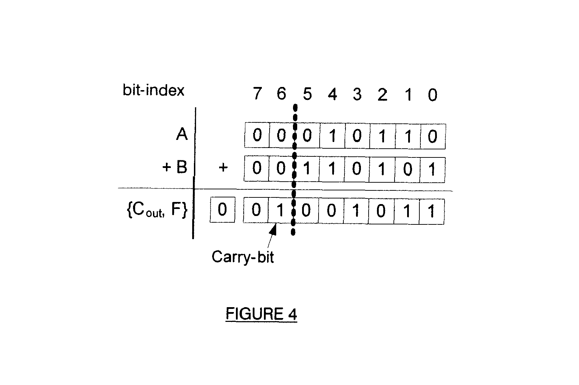

Operation of the ALU 2 of figure 3a and 3b will now be described with reference to Figure 4 and in particular, operation during an unaligned arithmetic operation. As described in the introduction, a problem occurs with conventional ALUs when they attempt to execute functions on binary numbers having a number of bits v less than the bit width w of the ALU 2 (v<w). In particular, the carry-bit does not propagate all the way through the arithmetic carry chain and remains at F[v] where v is the bit length of the unaligned inputs. As an example we consider the situation of an addition operation where the input comprises two 6-bit numbers and the ALU 2 is arranged to receive 8-bit inputs. The instruction input I in Figure 3b will be provided with an op-code indicating that an addition is to be performed which will be fed as an instruction signal to each of 30-1 to 30-n (bitslice[0] to bitslice[7] for an 8-bit ALU). The corresponding bits of A and B are fed to the respective bit-slices 30-1 to 30-n and each bit-slice performs in turn a 1-bit binary addition with carry operation taking the carry output of the preceding stage as its input. Figure 4 shows an arithmetic result, with two 6-bit inputs 41 and 42 specified as A=010110 and B=110101. As will be appreciated, the result of adding these numbers results in an overflow and therefore a positive carry. The carry chain of Figure 3b operates in its usual manner for the first 6-bits with the carry output propagated through the carry chain. However, as the two unused MSB bits of A and B are populated with 0s then:

$$F[6] = A[6]+B[6]+Cout[5] = 0+0+Cout[5] = Cout[5] = 1$$

$$=> Cout[6] = 0, \text{ and}$$

$$F[7]=0+0+Cout[7] = 0+0+0 = 0;$$

$$=> Cout[7] = Cout = 0$$

Thus, the carry bit is embedded at the F(6) position in the F output and has no way to propagate to the Cout position. In other words, the carry bit is not propagated through the arithmetic carry chain of bit-slices but remains at F[v] bit position. This is problematic because in certain optimised architectures there is no easy way to extract or route the carry bit from the output F to the most common destinations. Such optimised architectures are designed to expect the carry bit at the main carry output Cout of the ALU 2 and routing is biased based on this assumption to minimise the circuit area while providing easy access to the most likely connections.

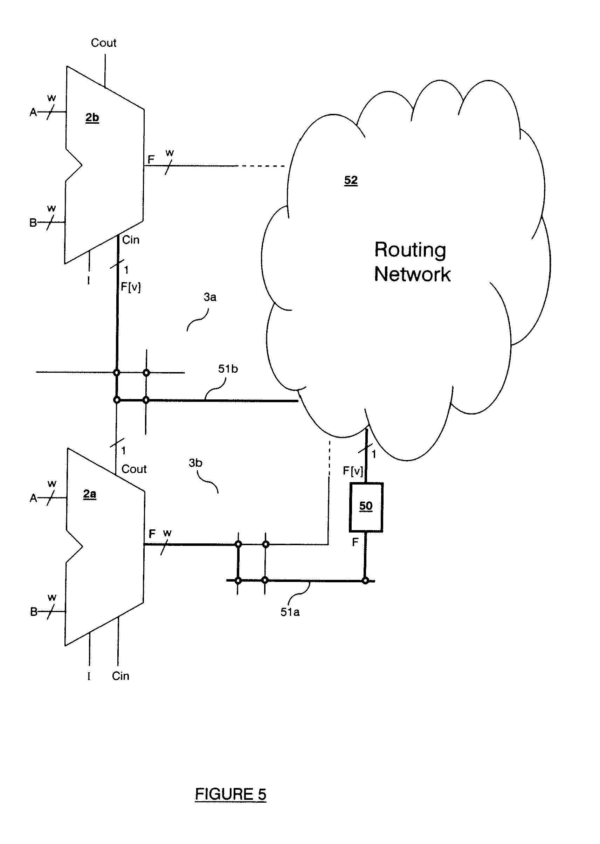

This problem is further illustrated in Figure 5 which shows a block diagram representing a portion of a fabric such as that shown in Figure 2 with ALUs 2a and 2b implemented in the manner shown in figures 3a and 3b.

An ALU 2a is shown connected to adjacent switch boxes 3a and 3b above and to the right with a further ALU 2b shown above the switch box 3a. Certain nodes of the switch box are configured to be connected to an overlaid routing network 52 which permits long connections crossing for example multiple ALUs. As shown the Cout output of ALU 2a is conveniently positioned for routing through switch box 3a to the Cin input of ALU 2b. However, in this example the actual carry value is held within the F output of ALU 2a. Accordingly it is required to redirect the F output signal towards switch box 3a via the routing network. In particular the signal is routed via switch box 3b to the routing network via connection 51 a and then from the routing network 52 to switch box 3a and then to ALU 2b. In addition, a further logic circuit 50 configured to extract the F[v] bit from F which holds the desired carry value is required which is shown in this example as being interposed between routing network 3b and routing network 52, The extracted value is then provided from the logic circuit 50 to the carry input of ALU 2b. As will be appreciated these additional interconnects and logic circuitry are undesirable because they require additional circuit area and may increase power consumption.

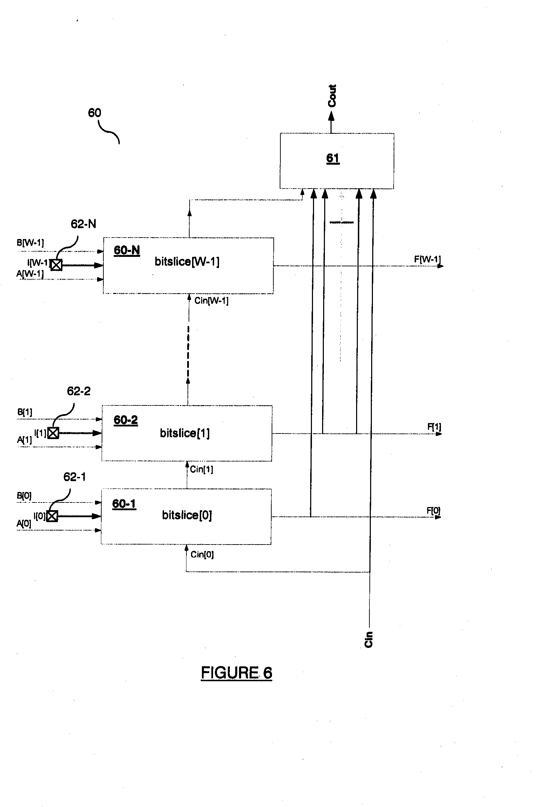

Figure 6 shows an embodiment of the present invention which overcomes at least some of the disadvantages of the prior art ALU described above. In Figure 6, each of the bit-slices 60-1 to 60-N of ALU 60 largely correspond to those of the prior art 8-bit ALU architecture 30-1 to 30-n shown in Figure 3b. However, as shown in Figure 6 the instruction inputs of the bit-slices 60-1 to 60-N are configured independently from each other. That is to say the instruction inputs of the bit-slices are not provided by means of a common input. This provides additional flexibility in configuring the performance of the ALU 60 and as will be discussed below is particularly useful for performing binary arithmetic operations on input signals containing a number of bits less than the bit width of the ALU 60 and also for random logic operations. Specifically each bit-slice 60-1 to 60-n has a corresponding input I[0] to I[w-1] which in this embodiment is connected to a corresponding input node 62-1 to 62-n which may correspond, for example, to outputs from a configuration memory.

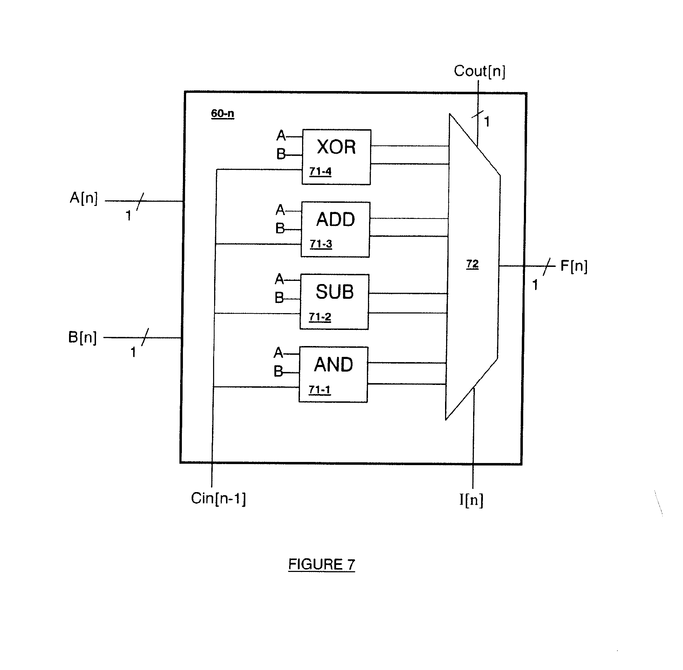

Turning now to Figure 7, there is shown a schematic of an individual bit-slice 60-N. The bit-slice 60-N comprises functional circuits 71-1 to 71-4 which in this embodiment are configured to perform XOR, ADD, SUB and AND operations respectively on input bits A[n], B[n] and Cin[n]. The outputs F[n] and Cout[n] of the functional circuits 71-1 to 71-4, are connected to inputs of a multiplexer (MUX) 72. The instruction input I[n] provided with a signal from an input node and provides the selection bits of the MUX to select which pair of output signals from the functional circuits 71-1 to 71-4 is to be provided as the outputs of the multiplexer Cout[n] and F[n] providing the outputs of the bit-slice. In this way the independent instruction signal I[n] effectively selects which operation the bit-slice 60-N will perform.

Although, four functional circuits 71-1 to 71-4 are shown in this example it will be appreciated that other numbers of functional circuits could be used and/or the functional circuits could be configured to perform operations differing from those shown, for example, any known Boolean logic or arithmetic operations. Also, other arrangements of functional circuits and selection may be used, for example, it is possible to arrange the circuit such that the inputs are not provided to all of the functional circuits 71-1 to 71-4 but rather the instruction signal I[n] is utilised to route the input signals to the desired functional circuit thereby saving on power consumption.

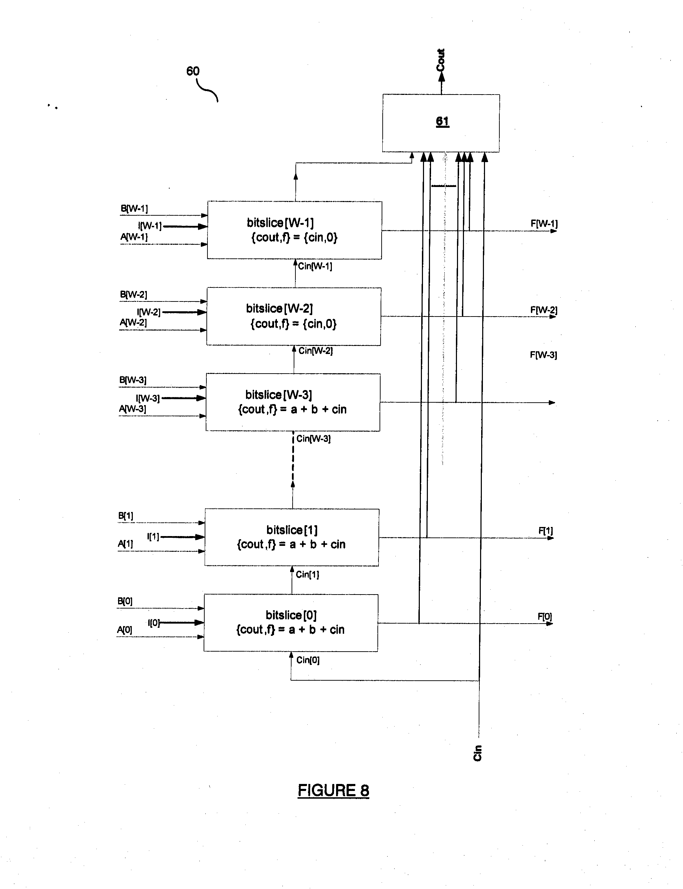

Figure 8 shows an embodiment of the invention in which the ALU 60 of figure 6 has been configured to perform a binary addition of input numbers of length v=w-2 bits (e.g. a 6-bit additional on an 8-bit ALU)

As shown the op-code provided as the instruction signal to bitslice[0] to bitslice[w-3] is an op-code corresponding to the add operation which configures the addressed bit slices to perform a single-bit add with carry operation. This operation generates the result of the addition of A[n]+B[n]+Cin[n] and presents the result at the single-bit F[n] output of the respective bit slice with any overflow output at the respective carry output Cout[0] to Cout[w-3]. However, the last two bit-slices in the chain (corresponding to the most-significant bits) bitslice[w-2] and bitslice[w-1] are configured to perform a different operation than the other bit-slices. Instead of receiving the 'add' op-code they instead are configured with a signal carrying a 'carry forward' op-code. The 'carry forward' op-code configures a bit-slice to perform an operation whereby a 0 is returned at the F[n] output and the value received at its carry input Cin is directly forwarded and provided at the carry output Cout[n].

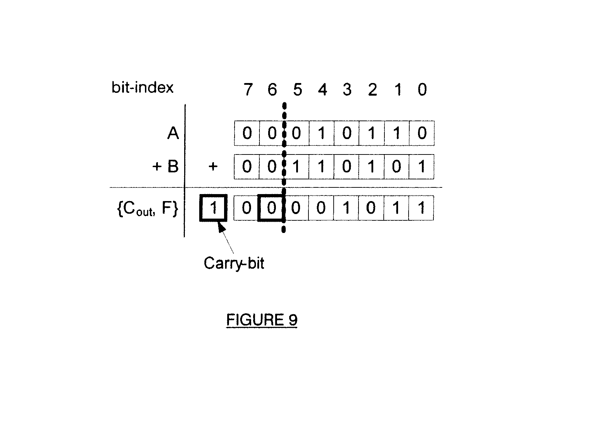

Where inputs A=010110 and B=110101 are utilised as in the prior art example discussed hereinbefore with reference to Figure 4 the resulting carry bit will be forwarded to the Cout[w-1] carry output. This is shown in Figure 9 where the F[6] bit which contains the carry bit for the six-bit addition is forwarded by the bitslice[6] and bitslice[7] to the Cout of the ALU via the carry logic.

Thus, the extra degree of design freedom offered by independently configurable bit-slices permits a designer to configure the ALU so that a bit of the F output is diverted from its normal position to the carry output Cout, thereby allowing a routing network optimised for operations biased for easy access to the carry output to be used at maximum efficiency even for unaligned arithmetic operations.

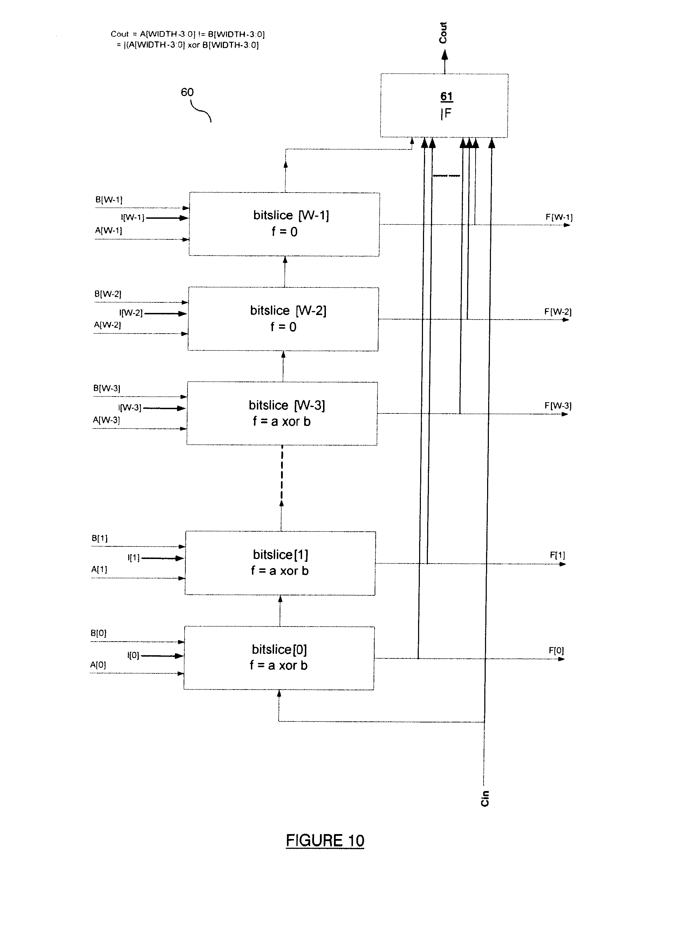

Figure 10 shows a W-bit wide ALU configured to perform a W-2 bit not-equal test. The first W-2 bit-slices (bitslice[0] to bitslice[W-3]) are configured by their respective instruction inputs to perform an exclusive or (XOR) operation with corresponding bits of the multi-bit inputs A and B. The carry logic circuit is configured to perform an inclusive OR-wise reduction on the bits F[0] to F[W-1]. If any pair of bits differ in the first W-2 bits of A and B, the result at Cout computed by the Carry Logic will be true. The upper 2 bits of A and B are configured at their instruction inputs I[W-1] and I[W-2] to always output 0 on their respective F outputs F[W-1] and F[W-2]. Accordingly, any values in these bits cannot influence the result at Cout.

Note that in this embodiment the carry-chain between slices is not used to perform this operation but is in the diagram for consistency.

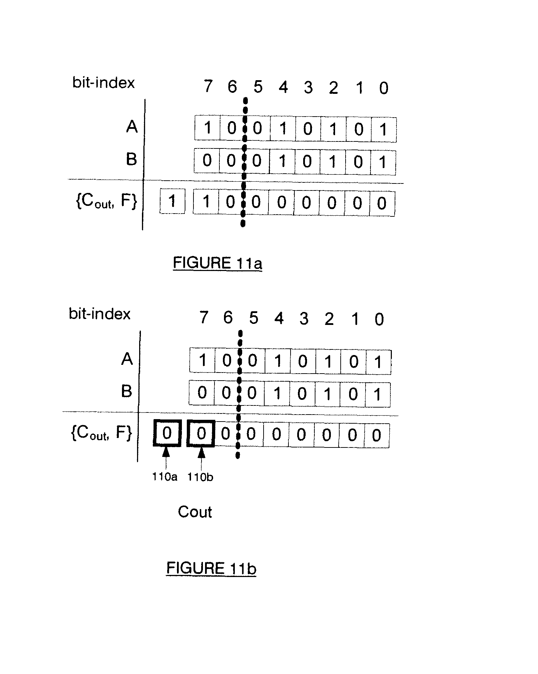

Figures 11 a and 11 b show the not-equal operation with a conventional ALU and with the ALU embodiment of Figure 10 respectively. As shown in Figure 11 a the '1' at the MSB position of input A inadvertently causes a positive result when attempting to determine whether the first 6-bits of A and B are equal. However, as shown in Figure 11b when using the ALU as configured in Figure 10 the upper two bits 110a and 110b are configured to ignore the A and B inputs and accordingly do no effect the result.

Thus, with the embodiment of Figure 10, the ALU can be configured to ignore some input bits, allowing un-aligned operations to be implemented using fewer resources. For example, without the invention, it may have been necessary to be mask out the upper bits of A and B by bitwise-ANDing them with the binary pattern 00111111 in additional ALUs.

It is also envisaged that the present invention could be utilised to perform combinations of operations to perform logic functions within a device other than unaligned logic and arithmetic operations.

'Random logic' is a term used in the art to refer to combinatorial circuits deriving mainly 1-bit results from mainly 1-bit input signals. As will be appreciated, random-logic is utilised in many types of circuitry and often occurs in control circuitry such as finite state machines (FSMs). Where 'random logic' is to be implemented, the vectors of bits on the A and B inputs of the ALU should not be interpreted as numbers but as distinct signals representing logical states. An example of the kind of logic function that may be considered 'random logic' would be 'a counter has reached 100 and a data input buffer is non-empty or an abort request has been received'.

Previous ALUs could not be efficiently used to implement random logic because all bit-slices performed the same function and all input bits influenced the output(s). The ALU architecture described in the embodiments above is much more amenable to implementing random logic.

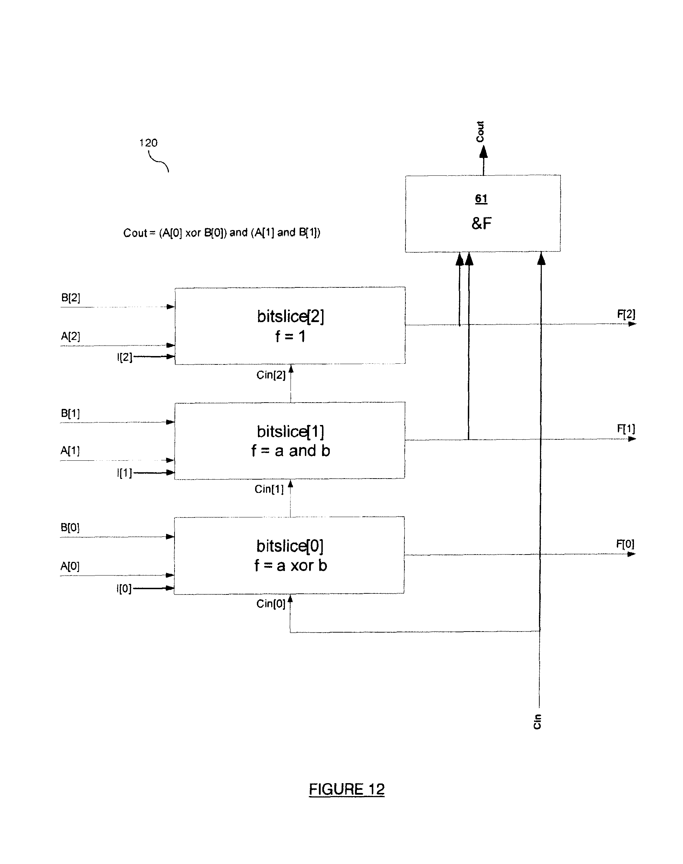

Figure 12 shows an embodiment whereby a four-input random logic function is implemented on an ALU 120 having a bit width W=3. The ALU 120 is configured to perform the function f(A, B, Cin)= ((A[0] xor B[0]) and (A[1] and B[1]))=Cout. Specifically, a first bitslice[0] is configured via instruction input I[0] to perform the operation f[0]=A[0] xor B[0], a second bitslice[1] is configured via instruction input I[1] to perform the operation f[1] =A[1] and B[1] and a final bitslice[2] is configured to return a '1' regardless of the inputs A[2] and B[2]. The carry logic 61 is configured to perform the function Cout=&F whereby &F denotes an AND-wise reduction operation on the input bits F[0] to F[2] provided by the outputs of bitslice[0] to bitslice[2] of the carry logic respectively. The output of the carry logic 61 provides the result of the arbitrary function at the Cout output of the ALU 60.

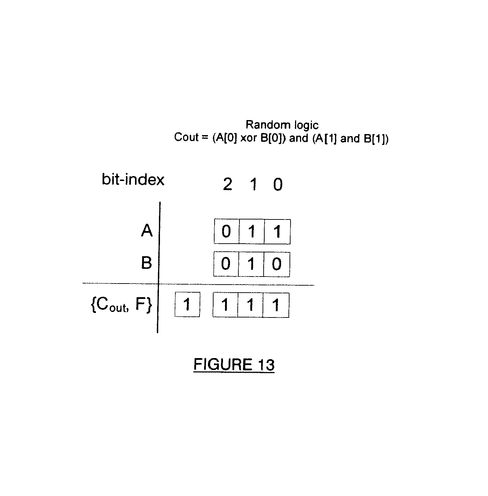

An example of arbitrary inputs A=011 and B=010 and the resulting output from the ALU as configured in Figure 12 is shown in Figure 13 where a result of 1 at the output Cout.

Again in this embodiment the carry-chain between slices is not used to perform this operation but is in the diagram for consistency. As will be appreciated depending on the design requirements of the ALU and the device fabric architecture the ALU may have the bit-slices configured in carry chain. For example, where it is envisaged that an ALU will only be utilised for performing one or more random logic functions it may not be necessary to have the bit-slices arranged in a carry chain as often only the F outputs are used to implement such functions (optionally in conjunction with a carry logic circuit).

In the embodiments above the instruction inputs of the bit-slices of the ALU are shown as static inputs connected at the design stage to memory elements in the programmable logic device In other embodiments the inputs are configured dynamically at run-time by data signals provided from other circuit components or ALUs in the device fabric or elsewhere. In another embodiment the inputs may be a combination of static and dynamic inputs.

As described above many advantages flow from having bit slices that are independently configurable. However, not all of the bit-slices within a single ALU need to be arranged such that they have an independent instruction input. For example, an ALU may be configured such that it is always utilised for performing unaligned operations on inputs of a particular bit-width (e.g. 6-bit operations on an 8-bit ALU). In such a circumstance it would be desirable to minimise the connections by having a common input for the bit-slices used to perform the arithmetic or logical operation (e.g. binary addition or subtraction) and independent static inputs for the unaligned most significant bits feeding a carry forward instruction.

Alternatively, if there is more than one unaligned bit these can also have a common input indicating the carry-forward function such that there exist two groups of bit-slices which are arranged to have an independent instruction input. In other words at least two of the bit-slices are configurable independently from each other.

In a further embodiment a further instruction logic circuit is provided which takes a single instruction signal I and provides a number of output instruction signals $I_0$ to $I_{w-1}$ to the bit-slices of the ALU based on the value of the single instruction signal I. The instruction logic could for example be a combinatorial logic block, an FSM or a look up table (LUT) circuit. The advantage is that a single instruction signal can be received and use to determine what signals need to be sent to the independent instruction inputs of the bit-slices which can simplify the external connections and routing of the fabric in which the ALU resides.

Although the above embodiments have been described in terms of an ALU having separate 'bit-slices' it is envisaged that in other embodiments equivalent processing can be performed by other programmable apparatus or data processing means arranged such that an operation performed on one bit pair of the multi-bit inputs is independently configurable from an operation performed on at least one other bit pair of the multi-bit inputs. Such embodiments might result from the application of circuit optimisation techniques known in the art for reducing circuit area or increasing the speed of the circuit. For example, the speed of the arithmetic carry path could be improved by using carry-bypass, carry-lookahead or other known techniques resulting in a circuit where distinct bit-slice circuits would not be readily observable. Moreover, commonly used electronic design automation (EDA) software tools used to convert functional descriptions of designs into logic-circuits may perform many optimisations that would result in distinct bit-slices present in the design being amalgamated in the final circuit.

**Claims**

1. An arithmetic logic unit having at least two multi-bit inputs (A,B), a multi-bit function output (F), a carry input (Cin), and a carry output (Cout) operable to perform at least one function on the at least two multi-bit inputs to provide an output at the function output (F) comprising:

   a circuit for performing the function by performing operations on corresponding bit pairs (A[0], B[0] to A[W-1], B[W-1]) of the multi-bit inputs (A,B);
   wherein the circuit is arranged such that an operation performed on one bit pair (A[n], B[n]) of the multi-bit inputs is independently configurable from an operation performed on at least one other bit pair (A[n+1], B[n+1]) of the multi-bit inputs (A,B).

2. An arithmetic logic unit according to claim 1 wherein the circuit for performing the function comprises a plurality of bit-slice circuits each operable to perform any of a plurality of single-bit operations on corresponding bits of the multi-bit inputs and arranged to co-operate to perform the at least one function; and

at least one bit slice circuit in the circuit is arranged such that the operation it performs is independently configurable from at least one of the other bit slice circuits of the circuit.

3. An arithmetic logic unit according to claim 2 wherein

each of the plurality of bit-slice circuits comprises at least two single-bit inputs (A[n], B[n]), an instruction input (I[n]), and a single-bit function output providing one bit of the multi-bit function output (F)

the single-bit inputs (A[n], B[n]) of each bit-slice circuit are arranged to receive one bit from corresponding multi-bit inputs (A, B), said bit having a bit position within the multi-bit input (A, B) corresponding to the position of the bit-slice circuit;

each bit-slice circuit is operable to perform a plurality of operations on data provided at the single-bit inputs (A[n], B[n]) to provide output data at their respective single-bit function outputs (F[n]); and

said operation is configurable by a signal received at the instruction input (I[n]) wherein the instruction input of each bit-slice is arranged such that it is independently configurable from the instruction inputs of at least one of the other bit slice circuits.

4. An arithmetic logic unit according to any of claims 2 or 3 wherein said bit-slice circuits are arranged in an arithmetic carry chain.

5. An arithmetic logic unit according to claim 4 wherein each bit slice circuit further comprises a single-bit carry input (Cin[n]) and a single-bit carry output (Cout[n]);

and the bit slice circuits are arranged such that each single-bit carry output is connected to the single-bit carry input of the next bit-slice circuit in the chain thereby forming said arithmetic carry chain.

6. An arithmetic logic unit according to claim 5 wherein at least one of said operations utilises data provided at the single-bit carry input (Cin[n]).

7. An arithmetic logic unit according to any of claims 5 or 6 wherein at least one of said operations provides data at the single-bit carry output (Cout[n]).

8. An arithmetic logic unit according to any of claims 4 to 7 wherein the carry output (Cout[w-1]) of the last bit-slice circuit in the chain is utilised to provide the carry output (Cout) of the arithmetic logic unit.

9. An arithmetic logic unit according to any of claims 5 to 8 wherein the carry input (Cin[0]) of a first bit-slice circuit in the chain corresponds to the carry input (Cin) of arithmetic logic unit.

10. An arithmetic logic unit according to any of claims 2 to 9 wherein the plurality of operations that can be performed by the bit-slice comprises a carry forward function comprising forwarding a bit received at a single-bit carry input of the bit-slice to a single-bit carry output of the bit-slice circuit.

11. An arithmetic logic unit according to claim 10 for performing an unaligned arithmetic operation between two binary numbers having a bit width less than the multi-bit inputs (A, B) wherein bit-slices corresponding to the non-aligned most-signfficant bits are configured via their respective instruction inputs (I(W-2), I(W-1)) to perform the carry forward function.

12. An arithmetic logic unit according any preceding claim wherein the plurality of operations comprises any of a AND, NAND, OR, NOR, XOR, NXOR, Add or Subtract operation.

13. An arithmetic logic unit according to any of claims 2 to 12 further comprising an instruction circuit having instruction inputs configured to receive binary input signals for selecting the at least one function to be performed by the circuit wherein said instruction circuit is configured to provide a set of instruction signals to the instruction inputs (I[0] to I[n]) of the bit-slices to perform the at least one function.

14. An arithmetic logic unit according to any of claims 2 to 13 wherein any combination of outputs of the last bit slice in the carry chain corresponding to the most significant bit and the carry input (Cin) of the ALU are provided as inputs to carry logic configurable to perform an arithmetic or Boolean logic operation on received inputs, for example, a bit-wise reduction operation.

15. An arithmetic logic unit according to claim 14 wherein the operation of the carry logic configurable by a static or dynamic carry logic configuration signal provided as an input signal to the carry logic or where the operation of the carry logic is determined by further logic whose outputs provide said carry logic configuration signal.

FIGURE 1

FIGURE 2

FIGURE 3a

**FIGURE 3b**

bit-index       7   6   5   4   3   2   1   0

A      | 0 | 0 | 0 | 1 | 0 | 1 | 1 | 0 |

+ B    + | 0 | 0 | 1 | 1 | 0 | 1 | 0 | 1 |

{C$_{out}$, F}   | 0 | | 0 | 1 | 0 | 0 | 1 | 0 | 1 | 1 |

Carry-bit

FIGURE 4

14

FIGURE 5

FIGURE 6

FIGURE 7

60

B[W-1]
I[W-1]
A[W-1]

**bitslice[W-1]**
{cout,f} = {cin,0}

F[W-1]

Cin[W-1]

B[W-2]
I[W-2]
A[W-2]

**bitslice[W-2]**
{cout,f} = {cin,0}

F[W-2]

F[W-3]

Cin[W-2]

B[W-3]
I[W-3]
A[W-3]

**bitslice[W-3]**
{cout,f} = a + b + cin

Cin[W-3]

B[1]
I[1]
A[1]

**bitslice[1]**
{cout,f} = a + b + cin

F[1]

Cin[1]

B[0]
I[0]
A[0]

**bitslice[0]**
{cout,f} = a + b + cin

F[0]

Cin[0]

Cout

**61**

Cin

FIGURE 8

bit-index       7   6   5   4   3   2   1   0

A        | 0 | 0 | 0 | 1 | 0 | 1 | 1 | 0 |

+ B    +   | 0 | 0 | 1 | 1 | 0 | 1 | 0 | 1 |

$\{C_{out}, F\}$   | 1 | 0 | 0 | 0 | 0 | 1 | 0 | 1 | 1 |

Carry-bit

## FIGURE 9

Cout = A[WIDTH-3:0] != B[WIDTH-3:0]
= |(A[WIDTH-3:0] xor B[WIDTH-3:0]

60

**61**
|F

Cout

B[W-1]
I[W-1]
A[W-1]

bitslice [W-1]
f = 0

F[W-1]

B[W-2]
I[W-2]
A[W-2]

bitslice [W-2]
f = 0

F[W-2]

B[W-3]
I[W-3]
A[W-3]

bitslice [W-3]
f = a xor b

F[W-3]

B[1]
I[1]
A[1]

bitslice[1]
f = a xor b

F[1]

B[0]
I[0]
A[0]

bitslice[0]
f = a xor b

F[0]

Cin

## FIGURE 10

bit-index     7   6   5   4   3   2   1   0

A    | 1 | 0 | 0 | 1 | 0 | 1 | 0 | 1 |

B    | 0 | 0 | 0 | 1 | 0 | 1 | 0 | 1 |

{$C_{out}$, F} | 1 | | 1 | 0 | 0 | 0 | 0 | 0 | 0 | 0 |

FIGURE 11a

bit-index     7   6   5   4   3   2   1   0

A    | 1 | 0 | 0 | 1 | 0 | 1 | 0 | 1 |

B    | 0 | 0 | 0 | 1 | 0 | 1 | 0 | 1 |

{$C_{out}$, F} | 0 | 0 | 0 | 0 | 0 | 0 | 0 | 0 | 0 |

110a   110b

Cout

FIGURE 11b

21

120

Cout = (A[0] xor B[0]) and (A[1] and B[1])

Cout

61
&F

B[2]
A[2]
I[2]

bitslice[2]
f = 1

F[2]

Cin[2]

B[1]
A[1]
I[1]

bitslice[1]
f = a and b

F[1]

Cin[1]

B[0]
A[0]
I[0]

bitslice[0]
f = a xor b

F[0]

Cin[0]

Cin

FIGURE 12

Random logic
Cout = (A[0] xor B[0]) and (A[1] and B[1])

bit-index    2   1   0

| | 2 | 1 | 0 |
|---|---|---|---|
| A | 0 | 1 | 1 |
| B | 0 | 1 | 0 |
| {$C_{out}$, F} | 1 | 1 | 1 | 1 |

FIGURE 13

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 10 17 2202

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 227 989 A (JONES JR MORRIS E [US] ET AL) 13 July 1993 (1993-07-13) <br> * column 2, line 51 - column 3, line 2; figure 1 * <br> * column 3, line 66 - column 4, line 56 * <br> ----- | 1-13 | INV. <br> G06F7/575 <br> G06F7/02 |
| A | US 5 020 016 A (NAKANO MASAKO [JP] ET AL) 28 May 1991 (1991-05-28) <br> * figure 4 * <br> ----- | 14,15 | |
| A | CORTADELLA J ET AL: "EVALUATION OF A + B = K CONDITIONS WITHOUT CARRY PROPAGATION", IEEE TRANSACTIONS ON COMPUTERS, IEEE SERVICE CENTER, LOS ALAMITOS, CA, US, vol. 41, no. 11, 1 November 1992 (1992-11-01), pages 1484-1488, XP000331189, ISSN: 0018-9340, DOI: DOI:10.1109/12.177318 <br> * figure 3; table II * <br> ----- | 14,15 | |
| A | US 4 323 981 A (NAKAMURA NORIMITSU) 6 April 1982 (1982-04-06) <br> * column 1, line 46 - line 59; figures 11,12 * <br> ----- | 14,15 | TECHNICAL FIELDS SEARCHED (IPC) <br> G06F |

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 12 April 2011 | Verhoof, Paul |

EPO FORM 1503 03.82 (P04E07)

Europäisches
Patentamt

European
Patent Office

Office européen
des brevets

**INCOMPLETE SEARCH
SHEET C**

Claim(s) completely searchable:
        1-10, 12, 13

Claim(s) searched incompletely:
        11, 14, 15

Reason for the limitation of the search:

The appliant chose not to reply to the invitation pursuant to Rule 63(1)
EPC. As explained in this invitation, this means that it is not possible
to permorf a complete search for claims 11, 14 and 15.
In particular for claim 11 the term "unaligned" was only searched in its
normal meaning: The term "unaligned arithmetic operation between two
binary numbers" means an operation where some bits of one operand do not
have a corresponding bit in the other operand. This is the case where an
8-bit integer operand is added to a 16-bit integer operand.
The term "any combination of outputs of the last bit slice" in claim 14
is unclear. It was only searched in its interpretation according to p. 7,
l. 27-31.
The term "arithmetic" in claim 14 is not supported by the description.
This term was disregarded for the search.
For reasons of lcarity, in claim 15 the terms "static or dynamic" and the
part after "or" on page 18, line 27 were disregarded for the search.

**ANNEX TO THE EUROPEAN SEARCH REPORT
ON EUROPEAN PATENT APPLICATION NO.**

EP 10 17 2202

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2011

| Patent document cited in search report | | Publication date | Patent family member(s) | | Publication date |
|---|---|---|---|---|---|
| US 5227989 | A | 13-07-1993 | US 5327364 | A | 05-07-1994 |
| US 5020016 | A | 28-05-1991 | DE 68927560 | D1 | 30-01-1997 |
| | | | DE 68927560 | T2 | 28-05-1997 |
| | | | EP 0339685 | A2 | 02-11-1989 |
| | | | JP 1277931 | A | 08-11-1989 |
| US 4323981 | A | 06-04-1982 | DE 2846117 | A1 | 26-04-1979 |
| | | | FR 2406852 | A1 | 18-05-1979 |
| | | | GB 2007886 | A | 23-05-1979 |
| | | | JP 1212353 | C | 12-06-1984 |
| | | | JP 54059845 | A | 14-05-1979 |
| | | | JP 58033572 | B | 20-07-1983 |

EPO FORM P0459

For more details about this annex : see Official Journal of the European Patent Office, No. 12/82

**EP 2 416 241 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6353841 B
- US 6252792 B

- US 20020157066 A